# EUROPEAN PATENT APPLICATION

(11) **EP 4 759 581 A1**
(43) Date of publication of application: **17.06.2026**
(21) Application number: 24220224.0
(22) Date of filing: 16.12.2024
(51) Int. Cl.: B60J 7/043

(54) **A ROOF SYSTEM FOR A VEHICLE AND A VEHICLE PROVIDED THEREWITH**

(71) Applicant: Inalfa Roof Systems Group B.V., 5807 GW Oostrum (NL)
(72) Inventor: van Boxtel, Eduardus Christianus Henricus, 5411 DA ZEELAND (NL); Custers, Jur Johannes Maria, 5973 KC LOTTUM (NL); Jüngling, Rainer Gerhard, 41179 MÖNCHENGLADBACH (DE)
(74) Representative: De Vries & Metman

(57) **Abstract**

The invention relates to a roof system for a vehicle (10) having a roof opening (12) in a stationary roof part (11). The roof system comprises at least a panel (1) which is movable in a longitudinal direction of the vehicle (10) between a closed position and an, at least partially, open position. The roof system further comprises an operating mechanism for moving the panel between its closed and open positions. The operating mechanism comprises: a pair of longitudinally extending stationary guide rails (6) at opposite sides of the roof opening; a driven slide (7) with at least one operating channel (5) which is movable along one of the guide rails (6) and a lever (2, 3) that with a first end is connected to the panel (1) and that through at least one cam (4) engages and is driven by the operating channel (5) of the driven slide (7) in such a manner that the panel (1) moves between its closed and open positions. The driven slide (7) and the lever (2, 3) are provided with at least one pair of cooperating engagement members (8, 9) which are positioned such that during a normal operation of the roof system, said engagement members (8,9) are out of engagement with each other, and upon deformation of the driven slide (7) and/or the front lever (2) said engagement members (8, 9) are in engagement with each other.

## Description

The present invention firstly relates to a roof system for a vehicle having a roof opening in a stationary roof part according to the preamble of claim 1.

Such a roof system is known in the prior art, for example from EP3552853A1.

While this system is working properly, there is an ever present wish to improve the safety of roof systems in, for example, the unfortunate event of a crash with a vehicle provided with such a roof system.

It is one of the objects of the present invention to further improve the prior art roof system.

For these and other purposes, a roof system is provided with features according to the characterizing part of claim 1.

By providing a roof system with engagement members that are out of engagement during normal operation, and are in engagement with each other upon deformation of the driven slide and/or front lever, for example in an extreme situation that causes deformation of the driven slide and/or the front lever, for at least partially absorbing larger forces when the panel is in an at least partially open position, the roof system may prevent or reduce (additional) damage to the roof system and/or prevent or reduce harm to passengers of a vehicle that the roof system is installed in.

The engagement members may keep or assist in keeping parts of the roof system in position during an extreme situation, such as a frontal crash.

The engagement members further may cause or assist in the controlled braking of parts during an extreme situation, such as a frontal crash.

The engagement members may, at least partially, be situated in a space that is unused in known roof systems, such that little or no additional height of the roof system is required by providing the roof system with the engagement members.

In an embodiment the engagement members are positioned and/or shaped such that they, when coming in engagement with each other, can absorb such larger forces acting in the longitudinal direction of the vehicle, for example forces as a result of a frontal crash of the vehicle.

During a frontal crash, a relatively large part of the forces on the roof system may act along a longitudinal direction of the vehicle. Having the engagement members positioned and/or shaped such that they can absorb such larger forces, may result in a safer vehicle for the occupants and/or less damage to the roof system during and/or after a frontal crash.

In an embodiment the engagement members are positioned and/or shaped such that they, when in engagement with each other as a result of said larger forces, load the lever in a direction at an angle different from zero with respect to the longitudinal direction of the vehicle.

This redirecting of forces may allow (parts of) the roof system and/or adjacent parts to become active for absorbing energy from an extreme situation such as a crash. Also, or alternatively, the redirection may help with the controlled braking of parts of the system. This way, the engagement members may help increase the safety of the roof system.

In an advantageous embodiment the cooperating engagement members comprise at least a protrusion provided on one of the driven slide and lever and a corresponding engagement edge on the other of the driven slide and lever.

This advantageous embodiment may allow for a simple system and/or may be easy to add to already existing roof systems, by using space that is currently not occupied. A wide range of more specific, practical embodiments can be used to apply the concept of engaging members according to claim 1. Some practical embodiments will be described hereafter, but this is by no means an exhaustive list, and other embodiments can be used as well.

In one practical embodiment the protrusion comprises a separate pin that is fitted in and/or on the driven slide or lever, respectively, preferably in and/or on the lever.

This embodiment, wherein a pin is fitted in a part of the roof system, may allow for its implementation with no or minimal changes to existing production processes of the known roof systems. Furthermore, such a pin may allow its retrofitting as at least a part of the cooperating engagement members in existing roof systems.

The pin may be made of the same material as the part of the roof system that it is extending from.

Alternatively, the pin may be made of another material than the part of the roof system it is extending from.

The pin may be made of many different materials, such as for example one or more of metal, rubber, plastic, and other materials that may be suitable for the application.

In another practical embodiment the protrusion is an integral part of the driven slide or lever, respectively, preferably of the lever.

Having an engagement member to be an integral part of the part it extends from, may require less assembly during production of the roof system and may increase the structural integrity.

In another embodiment the protrusion is bent out from a section of the driven slide and/or lever, respectively, preferably of the lever, remote from an edge thereof.

Having the protrusion bent out from a section remote from an edge may allow for a favourable force distribution within the part it is extending from. This distribution may utilise a large portion, or all, of the part in absorbing the larger forces acting on the roof system.

In an alternative embodiment, the protrusion is bent out from an edge section of the driven slide and/or lever, preferably of the lever.

One advantage of such an embodiment is its ease of manufacturing.

In an embodiment the engagement members comprise a part which is molded over the driven slide or lever, respectively, preferably over the lever.

The driven slide or lever may be provided with a recess, a protrusion or another provision for allowing an improved connection and force transfer between the molded part and the driven slide or lever.

In an embodiment the roof system further is provided with multiple pairs of cooperating engagement members which are positioned such that the cooperating engagement members of different pairs of engagement members will engage each other sequentially.

Such multiple pairs of cooperating engagement members thus will not act at the same time, but one after the other and thus may allow to absorb very large forces. As such, a first pair of cooperating engagement members will act first and the remaining pairs can be considered as back-up pairs for the event that the first pair cannot absorb all forces.

Multiple pairs of cooperating engagement members may also or alternatively allow for an improved force distribution over the roof system while absorbing the excess forces.

In an embodiment the cooperating engagement members comprise an end stop provided in the operating channel of the driven slide and one of the cams at an opposite second end of the lever.

The phrase `in the operating channel' also intends to include at the end or close to the end of the operating channel. The end stop also may be formed by an end of the operating channel.

Providing an end stop in the operating channel that cooperates with such a cam of a lever may allow for the lever to remain unchanged with respect to a known lever from a similar system without the engagement members. A part of the already known lever then will act as one of the engagement members of a pair of cooperating engagement members.

In an embodiment the roof system comprises a front and a rear lever for operating a forward and rearward edge of the panel, respectively, wherein each lever and respective driven slide are provided with cooperating engagement members.

As a result, the pair of cooperating engagement members belonging to the front lever and the pair of cooperating engagement members belonging to the rear lever can both independently absorb (part of) the excess forces. This may assist in keeping the roof system in a safe condition (and potentially keeping the panel substantially level).

The cooperating engagement members belonging to the front lever and the cooperating engagement members belonging to the rear lever generally are situated at a distance from each other. This may assist in preventing a rotation of the panel due to the excess forces, for example in a situation wherein the forces are striving to rotate the panel, and the point of rotation is at, or close to, one of the pairs of engagement members, in which situation the other one of the pairs of engagement members engages each other.

In an embodiment the engagement members belonging to the front lever and the engagement members belonging to the rear lever engage each other sequentially in an extreme situation of forces excessive of the design forces.

Apart from the advantages already explained above with respect to the use of multiple pairs of engagement members, a sequential engagement may elongate the braking path of the roof system and thereby may reduce the peak load on the system.

In an embodiment the roof system is a bottom loaded top slider roof system.

The present disclosure secondly relates to a vehicle comprising a roof system according to the invention.

Hereinafter the invention will be elucidated while referring to the drawings, in which:
FIG. 1A illustrates a perspective view of an example of a vehicle roof with an open roof assembly.
*Fig. 1B* is a schematic side view of a roof section of a vehicle provided with a roof system.
*Figs. 2A-2C* are sides view of a roof system according to the invention in different positions.
*Fig. 3A-3G* show details of different embodiments of the roof system according to the invention.

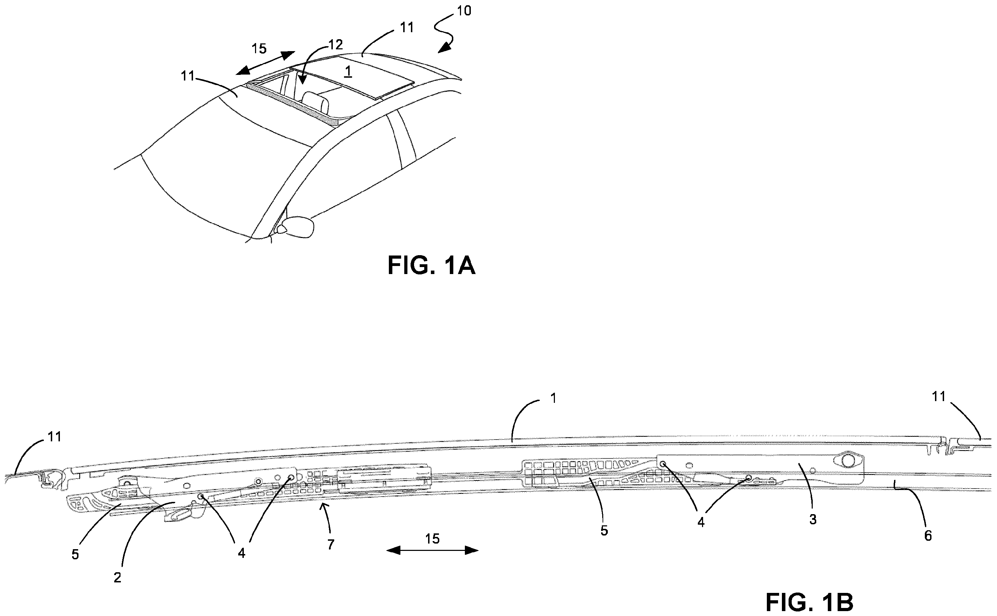

Fig. 1A illustrates a vehicle 10 having an open roof assembly arranged therein. The open roof assembly comprises a moveable panel 1 and a fixed panel 11. The moveable panel 1 is also referred to as a closure member, since the moveable panel 1 is moveable over a first roof opening 12 such to enable to open and to close the first roof opening 12 by moving in an opening and closing direction 15, respectively.

It is noted that the illustrated vehicle 10 corresponds to a passenger car. The present invention is however not limited to passenger cars. Any other kind of vehicles that may be provided with a moveable panel are contemplated as well.

Fig. 1B shows a side view of a roof system in a closed position and a stationary roof part 11 of a vehicle 10. The system comprises a panel 1 for closing and at least partially opening a roof opening 12 in the stationary roof part 11. The roof system is provided with an operating mechanism for moving the panel 1 between an open and a closed position in an opening and closing direction 15, respectively. The operating mechanism comprises multiple members, and some of these which help in understanding the present invention are discussed hereafter. It is noted, however, that the roof system also may comprise other members not discussed here.

The panel 1 at a front part thereof is pivotably connected to a first end of a front lever 2 and at a rear part thereof is pivotably connected to a first end of a rear lever 3. Here, each lever 2, 3 is provided with cams 4 (in the illustrated embodiment two cams 4) at the respective lower part of the lever, that engage and are driven by operating channels 5 of a driven slide 7 (which might by combined into a single operating channel). The driven slide 7 moves along a guide rail 6 and drives the cams 4 through the operating channel 5 to move the panel 1 in a desired manner between the open and the closed position, as is known per se. The shape of the operating channel 5 is in general used to control the movement of the levers 2, 3 and thus of the panel.

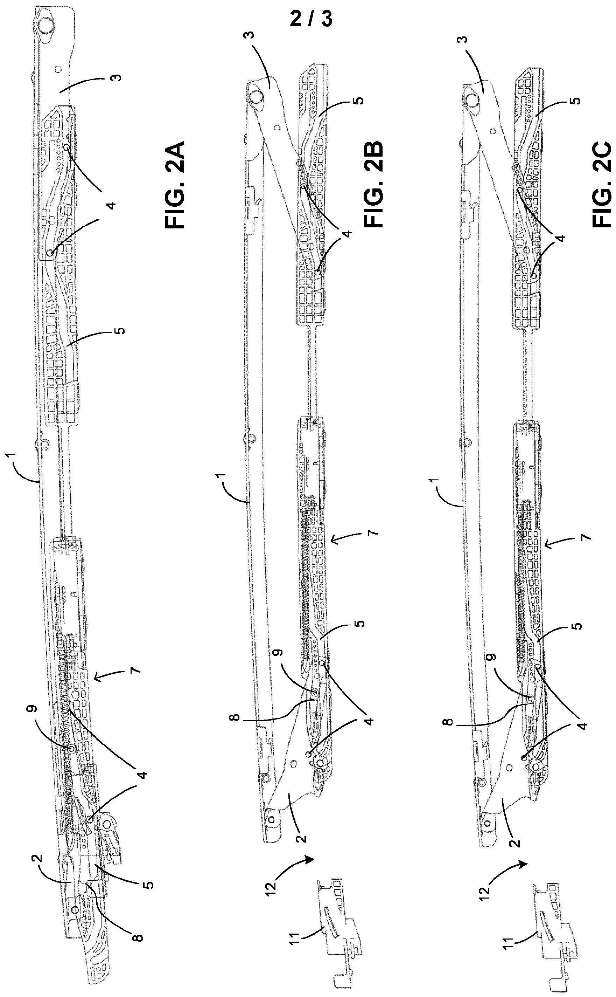

Figs. 2A-2C show a side view of an embodiment of the roof system according to the invention in various positions.

Fig. 2A shows the roof system in a closed position. The front lever 2 and the rear lever 3 are positioned in a substantially horizontal orientation. The front lever 2, which is the lever on the left in Fig. 2, is provided with an engagement member 9, in particular a protrusion. The driven slide 7 is also provided with an engagement member 8, in particular an edge. The protrusion and the edge together form a pair of cooperating engagement members 8, 9. The roof system in Fig. 2A is in a normal closed position, which is without excessive loading. In such a position the engagement members 8, 9 of the pair of engagement members are not in contact with each other.

Fig. 2B shows the same roof system as in Fig. 2A. In Fig. 2b the roof system is in a normal open position. The cams 4 provided on the levers 2, 3 are located in another position in the operating channel 5 with respect to the closed position illustrated in Fig. 2B. The operating channel 5 is provided with several curved sections. Due to the different location of the cams 4 in the operating channel 5, the levers 2, 3 are now positioned in an inclined position as a result of which the panel 1 is lifted and moved to the rear direction (to the right in the figure) with respect to the closed position (as is known per se in the state of the art). Fig. 2B shows the roof system in a normal open position, which is without excessive loading. The engagement members 8, 9 now also still are not in contact with each other.

Fig. 2C shows the roof system in an open position during an extreme situation, wherein the forces on the roof system exceed the design forces. In this figure, the cooperating engagement members 8, 9, in particular the protrusion and the edge, are engaging each other for absorbing at least a part of the excess forces. Such an engagement, for example, can occur due to a limited deformation of the roof system (especially of the front lever 2 and/or of the driven slide 7), which leads to little or no damage, because the engagement avoids that the roof system deforms too much in an irreversible manner.

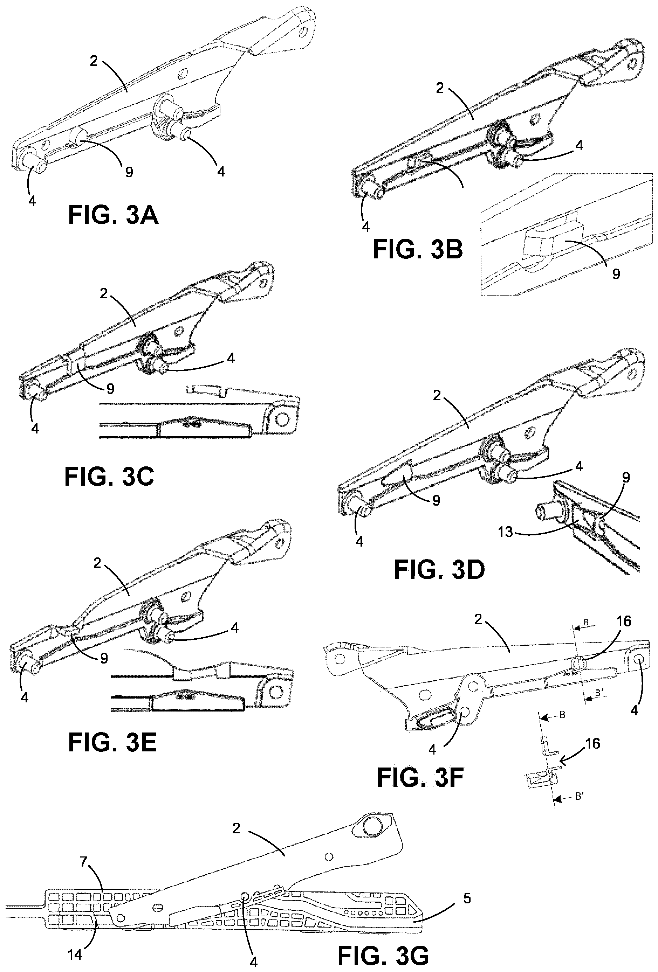

Figs. 3A-3G each show a front lever 2 provided with an embodiment of an engagement member 9. Similar or the same embodiments may be provided on a rear lever 3.

Fig. 3A shows a rear-side view of a lever 2 provided with an engagement member 9 embodied as a protrusion. Specifically, the protrusion comprises a pin that is fitted in the lever 2. The pin is an embodiment of an engagement member 9 of a pair of cooperating engagement members. The pin has a round shape, but a pin with another shape may also be applied. The lever 2 is further provided with cams 4 for cooperating with the operating channel of the driven slide.

Figs. 3B and 3D show a lever 2 provided with an engagement member 9 that is an integral part of the lever 2. The engagement member 9 in both figures is bent out from a section remote from an edge of the lever 2. Fig. 3B further shows a close-up of the engagement member 9. Fig. 3D further shows a portion of a lever 2 in a front side view, comprising a protrusion that comprises a molded part 13 that is molded over a part of the lever 2.

Figs. 3C and 3E too show a rear-side view of a lever and a side view of the other side of a part of the lever 2 provided with an engagement member 9 that is an integral part of the lever 2. Now, however, the engagement member 9 in both figures is bent out from an edge section of the lever 2.

Fig. 3F shows a side view of a lever 2 provided with a recess 16 suitable for receiving an engagement member 9. Fig. 3F further shows a cross section B-B' of the lever 2 at a location of the recess 16.

Fig. 3G shows a side view of a lever 2 and shows a part of a driven slide 7 provided with an operating channel 5. The operating channel 5 is provided with an end stop 14 for engaging a forward cam 4 that is provided on the lever 2 and that thus operates as an engagement member cooperating with another engagement member (i.e. the end stop 14).

The invention is not limited to the described embodiments that may be varied widely within the scope of the invention as defined by the appending claims.

## Claims

1. Roof system for a vehicle (10) having a roof opening (12) in a stationary roof part (11), at least comprising:
- a panel (1) which in a longitudinal direction of the vehicle (10) is movable between a closed position for closing the roof opening (12) and an, at least partially, open position for opening the roof opening (12);
- an operating mechanism for moving the panel between its closed and open positions;
wherein the operating mechanism comprises:
- a pair of longitudinally extending stationary guide rails (6) at opposite sides of the roof opening;
- a driven slide (7) with at least one operating channel (5) which is movable along one of the guide rails (6);
- a lever (2, 3) that with a first end is connected to the panel (1) and that through at least one cam (4) engages and is driven by the operating channel (5) of the driven slide (7) in such a manner that the panel (1) moves between its closed and open positions;
**characterized in that**:
the driven slide (7) and the lever (2, 3) are provided with at least one pair of cooperating engagement members (8, 9) which are positioned such that
a) during a normal operation of the roof system, said engagement members (8,9) are out of engagement with each other, and
b) upon deformation of the driven slide (7) and/or the front lever (2) said engagement members (8, 9) are in engagement with each other.

2. Roof system according to claim 1, wherein the engagement members (8, 9) are positioned and/or shaped such that they, when in engagement with each other, can absorb such larger forces acting in the longitudinal direction of the vehicle, for example forces as a result of a frontal crash of the vehicle.

3. Roof system according to claim 1 or 2, wherein the engagement members (8, 9) are positioned and/or shaped such that they, when in engagement with each other as a result of said larger forces, load the lever (2, 3) in a direction at an angle different from zero with respect to the longitudinal direction of the vehicle (10).

4. Roof system according to any of the preceding claims, wherein the cooperating engagement members (8, 9) comprise at least a protrusion (9) provided on one of the driven slide (7) and lever (2, 3) and a corresponding engagement edge (8) on the other of the driven slide and lever.

5. Roof system according to claim 4, wherein the protrusion comprises a separate pin (9) that is fitted in and/or on the driven slide (7) or lever (2, 3), respectively, preferably in and/or on the lever (2, 3).

6. Roof system according to claim 4, wherein the protrusion is an integral part of the driven slide (7) or lever (2, 3), respectively, preferably of the lever (2, 3).

7. Roof system according to claim 6, wherein the protrusion (9) is bent out from a section of the driven slide (7) and/or lever (2, 3), respectively, preferably of the lever (2, 3), remote from an edge thereof.

8. Roof system according to claim 6, wherein the protrusion (9) is bent out from an edge section of the driven slide (7) and/or lever (2,3), preferably of the lever (2, 3).

9. Roof system according to any of the claims 1-3,
wherein the engagement members (8, 9) comprise a part which is molded over the driven slide (7) or lever (2, 3), respectively, preferably over the lever (2, 3).

10. Roof system according to any of the previous claims and provided with multiple pairs of cooperating engagement members (8, 9) which are positioned such that the cooperating engagement members (8, 9) of different pairs of engagement members (8, 9) will engage each other sequentially, when deforming, in the longitudinal, forward direction of the vehicle (10) .

11. Roof system according to claim 1, wherein the cooperating engagement members (8, 9) comprise an end stop (14) provided in the operating channel (5) of the driven slide (7) and one of the cams (4) at an opposite second end of the lever (2, 3).

12. Roof system according to any of the preceding claims, wherein the roof system comprises a front and a rear lever (2, 3) for operating a forward and rearward edge of the panel, respectively, wherein each lever (2, 3) and respective driven slide (7) are provided with cooperating engagement members (8, 9).

13. Roof system according to claim 12, wherein the engagement members (8, 9) belonging to the front lever (2) and the engagement members (8, 9) belonging to the rear lever (3) engage each other sequentially in an extreme situation of forces excessive of the design forces.

14. Roof system according to any of the preceding claims, wherein the roof system is a bottom loaded top slider roof system.

15. Vehicle (10) provided with a roof system according to any of the preceding claims.
